# EUROPEAN PATENT APPLICATION

(11) **EP 4 787 695 A1**
(43) Date of publication of application: **05.08.2026**
(21) Application number: 23953899.4
(22) Date of filing: 26.10.2023
(51) Int. Cl.: H02M 1/32, H02M 3/158, H02M 1/088

(54) **THREE-LEVEL DC/DC CIRCUIT AND POWER SUPPLY SYSTEM**

(30) Priority: 26.09.2023 CN 202311258223
(71) Applicant: SUNGROW HYDROGEN SCI. & TECH. CO., LTD, Hefei, Anhui 230088 (CN)
(72) Inventor: JIANG, Cai, Hefei, Anhui 230088 (CN); WANG, Fei, Hefei, Anhui 230088 (CN); GONG, Shengwei, Hefei, Anhui 230088 (CN); LIU, Xiaohui, Hefei, Anhui 230088 (CN); WANG, Chengyue, Hefei, Anhui 230088 (CN); SUN, Longlin, Hefei, Anhui 230088 (CN)
(74) Representative: Epping - Hermann - Fischer
(86) International application number: PCT/CN2023/126716
(87) International publication number: WO 2025/065764

(57) **Abstract**

The present application discloses a three-level DC/DC circuit and a power supply system. The three-level DC/DC circuit comprises: a reverse current protection device, a first input capacitor, a second input capacitor, a first switch transistor, a second switch transistor, a third switch transistor, a fourth switch transistor, a first inductor, a second inductor, a first output capacitor, and a second output capacitor. The reverse current protection device is connected onto a current path between an output positive electrode and an input positive electrode. When the current flows in a direction from the output positive electrode to the input positive electrode, the reverse current protection device is turned off. When the input positive electrode is grounded, and when the current flows in a direction from the output positive electrode to the input positive electrode, the reverse current protection device is turned off. During normal operation of the three-level DC/DC circuit, the reverse current protection device is normally turned on. Thus, the risk of short-circuiting occurring from the output positive electrode to the input positive electrode of the DC/DC circuit can be avoided, and devices in the three-level DC/DC circuit can be protected.

## Description

The present application claims priority to Chinese Patent Application No.202311258223.3, titled "THREE-LEVEL DC/DC CIRCUIT AND POWER SUPPLY SYSTEM", filed on September 26, 2023 with the China National Intellectual Property Administration, which is incorporated herein by reference in its entirety.

### FIELD

The present disclosure relates to the technical field of renewable energy, and in particular to a three-level DC/DC circuit and a power supply system.

### BACKGROUND

Currently, with continuous development of renewable energy, a DC/DC circuit is widely used in a final stage of a power supply system to provide a direct-current voltage. For example, in an application scenario of an electrolyzer, the electrolyzer is powered by using a direct-current power supply, and the DC/DC circuit provides a direct-current operating voltage for the electrolyzer.

An electrolyzer, as a load, is typically is grounded through a negative electrode or a midpoint. For a DC/DC circuit with a load grounded not through a positive electrode, an input positive electrode of the DC/DC circuit may be grounded in a case that the DC/DC circuit experiences grounding due to a broken insulation or a foreign object contact with a copper bar during operation.

Since the negative electrode or the midpoint of the load of the DC/DC circuit is grounded, and the input positive electrode of the DC/DC circuit is grounded in the above case, the input positive electrode to the output positive electrode of the DC/DC circuit may be short circuited, resulting in damage to the components in the DC/DC circuit.

### SUMMARY

In view of this, a three-level DC/DC circuit and a power supply system are provided according to the present disclosure, to avoid a risk of short circuiting an output positive electrode and an input positive electrode of a DC/DC circuit that is grounded through the input positive electrode of the DC/DC circuit.

A three-level DC/DC circuit is provided according to the present disclosure. The three-level DC/DC circuit includes: a reverse current protection device, a first input capacitor, a second input capacitor, a first switching transistor, a second switching transistor, a third switching transistor, a fourth switching transistor, a first inductor, a second inductor, a first output capacitor, and a second output capacitor. A first terminal and a second terminal of the first input capacitor are respectively connected to a first node and a midpoint, an input positive electrode of the DC/DC circuit is connected to the first node, and a first terminal and a second terminal of the second input capacitor are respectively connected to the midpoint and a sixth node. A first terminal and a second terminal of the first switching transistor are respectively connected to the first node and a second node, a first terminal and a second terminal of the second switching transistor are respectively connected to the second node and the midpoint, a first terminal and a second terminal of the third switching transistor are respectively connected to the midpoint and a fifth node, and a first terminal and a second terminal of the fourth switching transistor are respectively connected to the fifth node and the sixth node. A first terminal and a second terminal of the first inductor are respectively connected to the second node and a third node, a first terminal and a second terminal of the first output capacitor are respectively connected to the third node and the midpoint, a first terminal and a second terminal of the second output capacitor are respectively connected to the midpoint and a fourth node, a first terminal and a second terminal of the second inductor are respectively connected to the fifth node and the fourth node, and an output positive electrode and an output negative electrode of the DC/DC circuit are respectively connected to the third node and the fourth node. The reverse current protection device is connected in a current path between the output positive electrode and the input positive electrode, and the reverse current protection device is configured to be switched off when a current flows in a direction from the output positive electrode to the input positive electrode.

In an embodiment, the reverse current protection device includes at least one of: a diode, a semi-controlled semiconductor device and a fully-controlled semiconductor device. The DC/DC circuit further includes a controller in a case that the reverse current protection device includes the semi-controlled semiconductor device or the fully-controlled semiconductor device. The controller is electrically connected to the semi-controlled semiconductor device or the fully-controlled semiconductor device. The controller is configured to control a switching state of the semi-controlled semiconductor device or the fully-controlled semiconductor device.

In an embodiment, the DC/DC circuit further includes: an overvoltage protection device. The overvoltage protection device is connected in a current path between the output negative electrode and an input negative electrode of the DC/DC circuit. The overvoltage protection device includes a fully-controlled semiconductor device. The overvoltage protection device is configured to be switched on when the current flows in a direction from the output negative electrode to the input negative electrode in a normal operation. The fully-controlled semiconductor device is configured to be switched off when the input positive electrode is short-circuited to ground.

In an embodiment, the DC/DC circuit further includes a detection device in the case that the reverse current protection device includes the semi-controlled semiconductor device or the fully-controlled semiconductor device. The detection device is configured to detect a voltage between the input positive electrode and the ground, and transmit the voltage between the input positive electrode and the ground to the controller. The controller is configured to determine whether a ground fault occurs at the input positive electrode, report the ground fault based on the voltage between the input positive electrode and the ground, and control the fully-controlled semiconductor device with bidirectional current flows to be switched off. In response to the ground fault occurring at the input positive electrode, the semi-controlled semiconductor device with unidirectional current flows or the fully-controlled semiconductor device with unidirectional current flow is automatically switched off. The controller is further configured to control the semi-controlled semiconductor device or the fully-controlled semiconductor device to be switched on in a case that no ground fault occurs at the input positive electrode.

In an embodiment, the detection device is further configured to: detect a voltage of the first input capacitor and a voltage of the second input capacitor to determine whether a voltage imbalance occurs, or detect a current of the first inductor and a current of the second inductor to determine whether the voltage imbalance occurs, or detect a current of the output positive electrode and a current of the output negative electrode to determine whether the voltage imbalance occurs.

In an embodiment, the reverse current protection device is connected between the input positive electrode and the first node.

In an embodiment, the reverse current protection device is connected between the first node and the second node.

In an embodiment, the reverse current protection device is connected between the second node and the third node.

In an embodiment, the reverse current protection device is connected between the third node and the output positive electrode.

In an embodiment, the overvoltage protection device is connected between the input negative electrode and the sixth node.

In an embodiment, the overvoltage protection device is connected between the sixth node and the midpoint.

In an embodiment, the overvoltage protection device is connected between the midpoint and the fifth node.

In an embodiment, the overvoltage protection device is connected between the fifth node and the fourth node.

In an embodiment, the overvoltage protection device is connected between the fourth node and the output negative electrode.

A power supply system is provided according to the present disclosure. The power supply system includes the three-level DC/DC circuit described above, and further includes an electrolyzer. The output positive electrode of the three-level DC/DC circuit is connected to a positive electrode of the electrolyzer, the output negative electrode of the three-level DC/DC circuit is connected to a negative electrode of the electrolyzer, and the negative electrode of the electrolyzer is grounded or a midpoint of the electrolyzer is grounded.

It can be seen that the present disclosure has the following beneficial effects.

According to the embodiments of the present disclosure, the three-level DC/DC circuit is arranged with a reverse current protection device. The reverse current protection device is connected in a current path between the output positive electrode and the input positive electrode. The reverse current protection device is switched off in a case that the input positive electrode is grounded and the current flows in a direction from the output positive electrode to the input positive electrode, and the reverse current protection device is normally switched on during normal operation of the three-level DC/DC circuit, thereby avoiding the risk of short circuiting the output positive electrode and the input positive electrode of the DC/DC circuit, and protecting the components in the three-level DC/DC circuit.

### BRIEF DESCRIPTION OF THE DRAWINGS

FIG. 1 is a schematic diagram of an application scenario of a three-level DC/DC circuit according to an embodiment of the present disclosure;
FIG. 2 is a schematic diagram of a three-level Buck TL circuit according to an embodiment of the present disclosure;
FIG. 3 is a schematic diagram of a short-circuit current in a case that an input positive electrode is grounded according to an embodiment of the present disclosure;
FIG. 4 is a schematic diagram of a three-level DC/DC circuit according to another embodiment of the present disclosure;
FIG. 5 is a schematic diagram showing a reverse current protection device being connected at a position P1 in a three-level DC/DC circuit according to an embodiment of the present disclosure;
FIG. 6 is a schematic diagram showing a reverse current protection device being connected at a position P2 in a three-level DC/DC circuit according to an embodiment of the present disclosure;
FIG. 7 is a schematic diagram showing a reverse current protection device being connected at a position P3 in a three-level DC/DC circuit according to an embodiment of the present disclosure;
FIG. 8 is a schematic diagram showing a reverse current protection device being connected at a position P4 in a three-level DC/DC circuit according to an embodiment of the present disclosure;
FIG. 9 is a schematic diagram of a three-level DC/DC circuit according to another embodiment of the present disclosure;
FIG. 10 is a schematic diagram showing an overvoltage protection device being arranged at a position P5 according to an embodiment of the present disclosure;
FIG. 11 is a schematic diagram showing an overvoltage protection device being arranged at a position P6 according to an embodiment of the present disclosure;
FIG. 12 is a schematic diagram showing an overvoltage protection device being arranged at a position P7 according to an embodiment of the present disclosure;
FIG. 13 is a schematic diagram showing an overvoltage protection device being arranged at a position P8 according to an embodiment of the present disclosure;
FIG. 14 is a schematic diagram showing an overvoltage protection device being arranged at a position P9 according to an embodiment of the present disclosure;
FIG. 15 is a schematic diagram showing a fully-controlled semiconductor device being arranged at a position P9 according to an embodiment of the present disclosure; and
FIG. 16 is a schematic diagram of a power supply system according to an embodiment of the present disclosure.

### DETAILED DESCRIPTION

In order to enable those skilled in the art to better understand and implement the technical solutions according to the embodiments of the present disclosure, an application scenario is firstly described below.

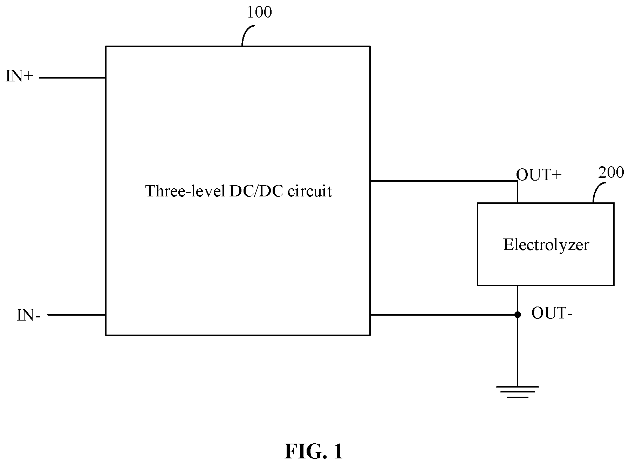

Reference is made to FIG. 1, which is a schematic diagram of an application scenario of a three-level DC/DC circuit according to an embodiment of the present disclosure.

For a three-level DC/DC circuit 100 according to an embodiment of the present disclosure, a load is not limited. The load may be any load that is directly powered and is not grounded through a positive electrode, such as an alkaline electrolyzer of which a negative electrode or a midpoint is grounded.

For ease of understanding, descriptions are provided by taking a load being an electrolyzer 200 grounded through a negative electrode as an example.

The three-level DC/DC circuit 100 includes an input positive electrode IN+ and an input negative electrode IN-, and an output positive electrode OUT+ and an output negative electrode OUT-. The output positive electrode OUT+ and the output negative electrode OUT-are respectively connected to a positive electrode and a negative electrode of the electrolyzer 200.

Descriptions are provided below by taking a three-level Buck TL circuit as the three-level DC/DC circuit as an example.

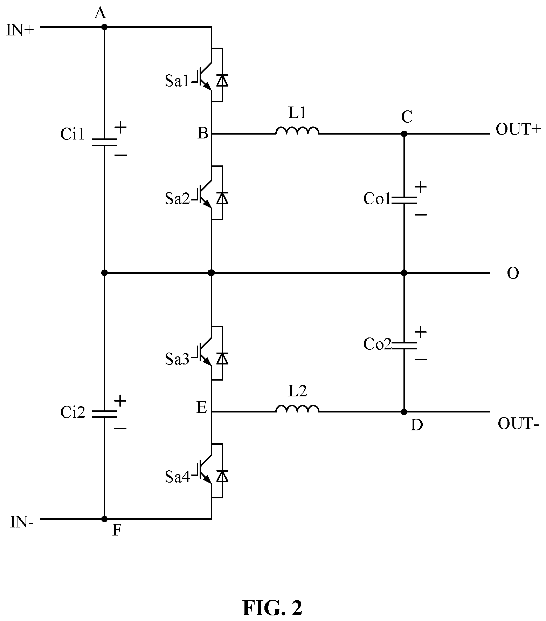

Reference is made to FIG. 2, which is a schematic diagram of a three-level Buck TL circuit according to an embodiment of the present disclosure.

The three-level DC/DC circuit in the embodiment of the present disclosure includes: a first input capacitor Ci1, a second input capacitor Ci2, a first switching transistor Sa1, a second switching transistor Sa2, a third switching transistor Sa3, a fourth switching transistor Sa4, a first inductor L1, a second inductor L2, a first output capacitor Co1, and a second output capacitor Co2.

A first terminal and a second terminal of the first input capacitor Ci1 are respectively connected to a first node A and a midpoint O. The input positive electrode IN+ of the DC/DC circuit is connected to the first node A. A first terminal and a second terminal of the second input capacitor Ci2 are respectively connected to the midpoint O and a sixth node F.

A first terminal and a second terminal of the first switching transistor Sa1 are respectively connected to the first node A and a second node B, a first terminal and a second terminal of the second switching transistor Sa2 are respectively connected to the second node B and the midpoint O, a first terminal and a second terminal of the third switching transistor Sa3 are respectively connected to the midpoint O and a fifth node E, and a first terminal and a second terminal of the fourth switching transistor Sa4 are respectively connected to the fifth node E and the sixth node F.

A first terminal and a second terminal of the first inductor L1 are respectively connected to the second node B and a third node C, a first terminal and a second terminal of the first output capacitor Co1 are respectively connected to the third node C and the midpoint O, a first terminal and a second terminal of the second output capacitor Co2 are respectively connected to the midpoint O and a fourth node D, a first terminal and a second terminal of the second inductor L2 are respectively connected to the fifth node E and the fourth node D, and an output positive electrode OUT+ and an output negative electrode OUT- of the DC/DC circuit are respectively connected to the third node C and the fourth node D.

According to a conventional control strategy for a three-level Buck TL circuit, Sa1 and Sa2 are switched on alternatively, and Sa3 and Sa4 are switched on alternatively. Thus, at least two of the four switching transistors Sa1 to Sa4 are simultaneously subjected to a total input voltage, which is equal to a sum of a voltage of Ci1 and a voltage of Ci2. By alternately switching on Sa1 and Sa2, the circuit controls outputting an upper half-bus voltage, that is, a voltage of Ci1. By alternately switching on Sa3 and Sa4, the circuit controls outputting a lower half-bus voltage, that is, a voltage of Ci2. A total output voltage of the circuit is equal to a sum of a voltage of Co1 and a voltage of Co2.

The descriptions are provided by taking a load being grounded through a negative electrode as an example in the present disclosure, which may be also applied to a load being grounded through a midpoint. In FIG. 2, the midpoint of the three-level DC/DC circuit is the point O at the output terminal.

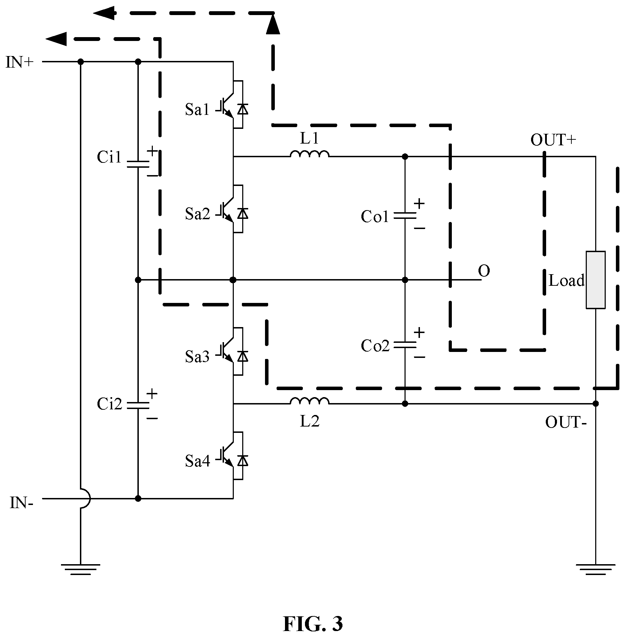

In an application scenario where the negative electrode of the load is grounded or the midpoint of the load is grounded, in a case that the input positive electrode IN+ of the DC/DC circuit is grounded, as shown in FIG. 3, current paths from the output positive electrode OUT+ to the input positive electrode IN+ exist which are represented by dashed lines with arrows in FIG. 3. The direct-current input capacitor Ci1 is short circuited through the grounded input positive electrode IN+, the grounded output negative electrode OUT-, L2 and an anti-parallel diode of Sa3, and Co1, Co2 and the Load are grounded through L1, an anti-parallel diode of Sa1, the input positive electrode IN+, and the output negative electrode OUT-. Since Ci1 is short circuited, Ci2 and Sa4 are subjected to a direct-current input voltage, which may cause overvoltage damage to the two devices. In applying to an electrolyzer scenario, the output capacitor and the load are discharged through an abnormal circuit path, causing the electrolyzer is instantly reverse discharged, resulting in irreversible damage to the diaphragm and other materials of the electrolyzer.

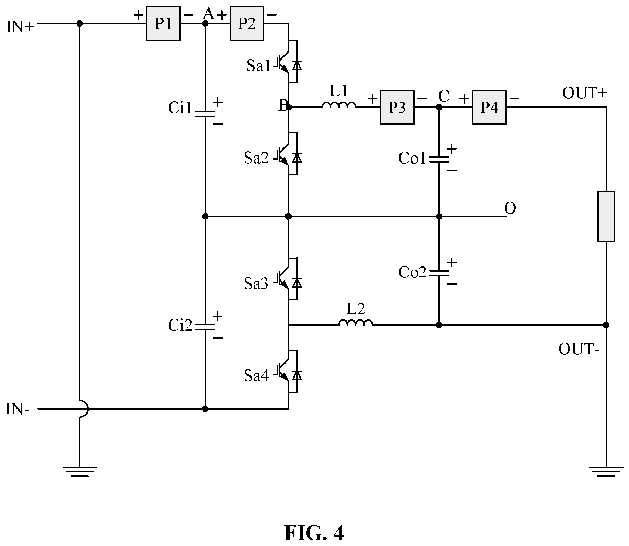

To address the above technical issues, a solution provided in the embodiments of the present application is described below with reference to the accompanying drawings. Reference is made to FIG. 4, which is a schematic diagram of a three-level DC/DC circuit according to another embodiment of the present disclosure.

In an embodiment of the present disclosure, the three-level DC/DC circuit includes: a reverse current protection device, a first input capacitor Ci1, a second input capacitor Ci2, a first switching transistor Sa1, a second switching transistor Sa2, a third switching transistor Sa3, a fourth switching transistor Sa4, a first inductor L1, a second inductor L2, a first output capacitor Co1, and a second output capacitor Co2.

Except for the reverse current protection device, the connections of other components are described above with reference to FIG. 3, and are not repeated herein.

The reverse current protection device is connected in a current path between the output positive electrode OUT+ and the input positive electrode IN+. The reverse current protection device is switched off when a current flows in a direction from output positive electrode OUT+ to the input positive electrode IN+.

As shown in FIG. 4, the reverse current protection device may be connected to at least one position among P1, P2, P3 and P4.

In FIG. 4, for example, the reverse current protection device is connected at the position P2, that is, the reverse current protection device is connected between the first terminal of Ci1 and the first terminal of Sa1. It should be understood that the position P2 may be located between the second terminal of Sa1 and the first terminal of L1. Similarly, for example, the reverse current protection device may be connected at the position P3, that is, the reverse current protection device is connected between the second terminal of L1 and the first terminal of Co1. It should be understood that the position P3 may be located between the first terminal of Sa2 and the first terminal of L1.

In a case that the three-level DC/DC circuit operates normally, the reverse current protection device is switched on in a forward direction. In a case that a ground fault occurs at the input positive electrode of the three-level DC/DC circuit, the reverse current protection device is switched off in a reverse direction.

In the three-level DC/DC circuit according to the embodiments of the present disclosure, the type of the reverse current protection device is not limited and may be configured according to actual requirements, as long as the reverse current protection device can switch off the current path from the output positive electrode to the input positive electrode. For example, the reverse current protection device may include at least one of: a diode, a semi-controlled semiconductor device, and a fully-controlled semiconductor device.

In a case that the reverse current protection device is a semi-controlled semiconductor device or a fully-controlled semiconductor device, the DC/DC circuit further includes a controller (not shown in the Figures). For example, the controller may be implemented by using a single-chip computer or an MCU, or other control chips.

The controller is electrically connected to the semi-controlled semiconductor device or the fully-controlled semiconductor device.

The controller is configured to control a switching state of the semi-controlled semiconductor device or the fully-controlled semiconductor device.

For example, the fully controlled semiconductor device may include any one of the following devices: an Insulated-Gate Bipolar Transistor (IGBT), an Integrated Gate-Commutated Thyristor (IGCT), a Metal-Oxide-Semiconductor Field-Effect Transistor (MOSFET), a Silicon Carbide (SiC) device, or the like. The semi-controlled semiconductor device may include a Silicon Controlled Rectifier (SCR), that is, a thyristor.

The controller is electrically connected to the semi-controlled semiconductor device or the fully-controlled semiconductor device, and controls the switching state of the semi-controlled semiconductor device or the fully-controlled semiconductor device. That is, in a case that the three-level DC/DC circuit operates normally, the controller controls the semi-controlled semiconductor device or the fully-controlled semiconductor device to be switched on; and in a case that the input positive electrode is grounded, the semi-controlled semiconductor device or the fully controlled semiconductor device is switched off automatically.

For example, the reverse current protection device may include a diode. The diode may be connected to at least one of positions P1 to P4 shown in FIG. 4. For example, the diode may be connected at the position P1, that is, an anode of the diode is connected to the input positive electrode IN+ and a cathode of the diode is connected to the first terminal of the first input capacitor Ci1. In a case that the input positive electrode IN+ is grounded, even if a current flows from the output positive electrode OUT+ to the input positive electrode IN+, the current path is cut off due to the reverse cutoff feature of the diode, thereby protecting the components in the three-level DC/DC circuit.

In using a diode as the reverse current protection device, the diode can perform reverse cutoff automatically without controlling, realizing rapid response for protection when a ground fault occurs at the input positive electrode.

In an embodiment, in the three-level DC/DC circuit according to the embodiments of the present disclosure, the DC/DC circuit further includes a detection device (not shown in the Figures) in the case that the reverse current protection device is a semi-controlled semiconductor device or a fully-controlled semiconductor device. The detection device is electrically connected to the input positive electrode and the controller. The detection device is configured to detect a ground fault at the input positive electrode, and the controller is configured to report the fault. The controller is configured to control the fully-controlled semiconductor device with bidirectional current flows to be switched off. For example, the fully-controlled semiconductor device with unidirectional current flows may be an IGBT. The fully-controlled semiconductor device with bidirectional current flows may be a MOS.

In a case that a ground fault occurs at the input positive electrode, the semi-controlled semiconductor device with unidirectional current flows or the fully-controlled semiconductor device with unidirectional current flows is automatically switched off.

The controller is further configured to control the semi-controlled semiconductor device or the fully-controlled semiconductor device to be switched on in a case that no ground fault occurs at the input positive electrode. For example, the detection device may detect a voltage at the input positive electrode, and transmit the voltage of the input positive electrode to ground to the controller. In a case that the input positive electrode is grounded, the voltage may drop significantly, even dropping 0V. The controller is configured to control the semi-controlled semiconductor device or the fully-controlled semiconductor device to be switched off after determining that a ground fault occurs at the input positive electrode based on the voltage of the input positive electrode to ground.

Hereinafter, examples are provided to illustrate specific implementations for connecting the reverse current protection device at different positions.

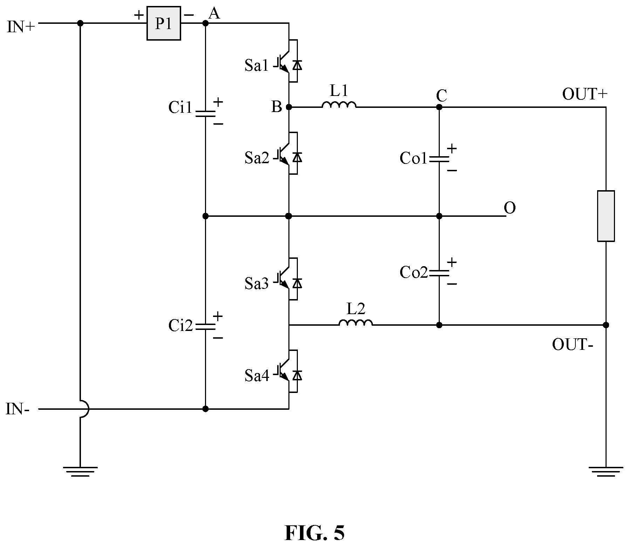

Referring to FIG. 5, in the three-level DC/DC circuit according to the embodiments of the present disclosure, the reverse current protection device is connected between the input positive electrode IN+ and the first node A.

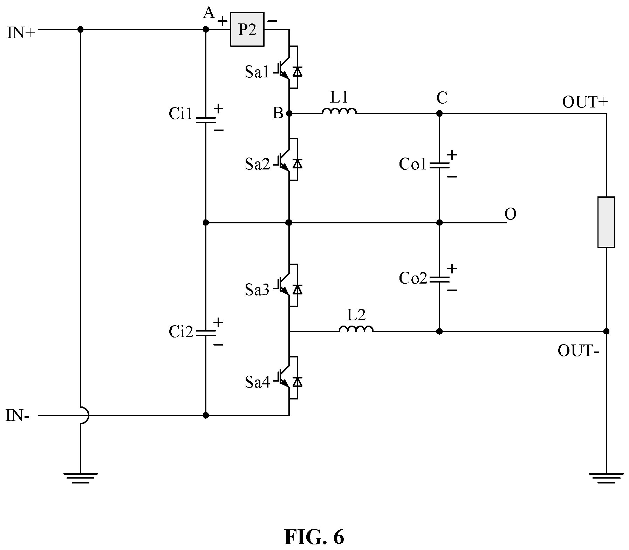

Referring to FIG. 6, in the three-level DC/DC circuit according to the embodiments of the present disclosure, the reverse current protection device is connected between the first node A and the second node B.

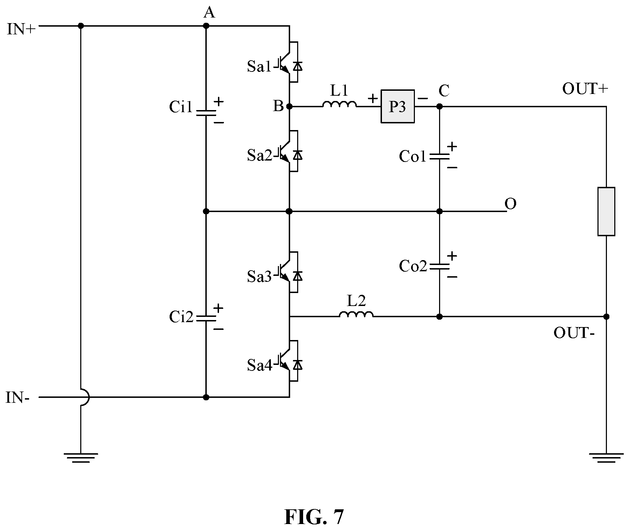

Referring to FIG. 7, in the three-level DC/DC circuit according to the embodiments of the present disclosure, the reverse current protection device is connected between the second node B and the third node C.

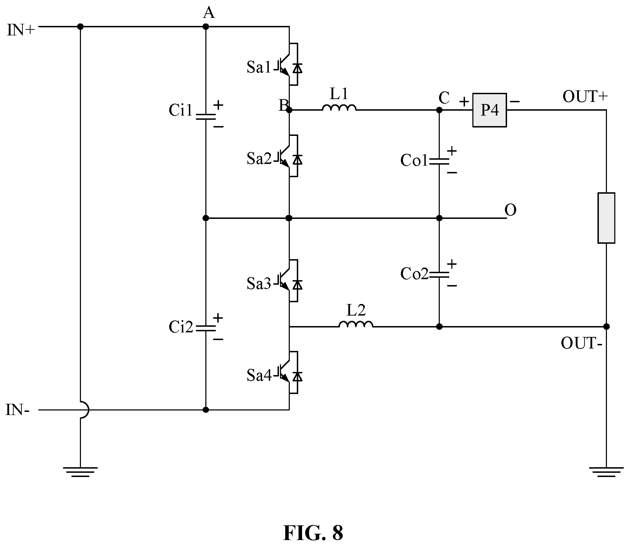

Referring to FIG. 8, in the three-level DC/DC circuit according to the embodiments of the present disclosure, the reverse current protection device is connected between the third node C and the output positive electrode OUT+.

In the three-level DC/DC circuit according to the embodiments of the present disclosure, the types of the first switching transistor to the fourth switching transistor are not limited, which may be fully-controlled semiconductor devices that may be controlled to be switched on and switched off or may include an anti-parallel diode. The specific types of the fully-controlled semiconductor devices may refer to the above descriptions.

In addition, for the three-level Buck TL circuit according to the embodiments of the present disclosure, in a case that the voltage of the first input capacitor and the voltage of the second input capacitor are severely unbalanced (where the voltage of the first input capacitor is equal to the voltage of the second input capacitor in normal conditions), the voltages borne by the second input capacitor, the third switching transistor and the fourth switching transistor may be greater than half of the direct-current input voltage, and may even exceed voltage tolerance limits of these devices, resulting in damages on these devices.

Therefore, to address the technical issue of voltage imbalance between the first input capacitor and the second input capacitor, the three-level Buck TL circuit according to an embodiment of the present disclosure further includes an overvoltage protection device. The overvoltage protection device is connected in a current path between the output negative electrode and the input negative electrode of the DC/DC circuit. The overvoltage protection device includes a fully-controlled semiconductor device. The types of the fully-controlled semiconductor device may refer to the above descriptions. The fully-controlled semiconductor device is switched off in a case that a voltage imbalance occurs between the first input capacitor and the second input capacitor. Detail descriptions are provided below with reference to the accompanying drawings.

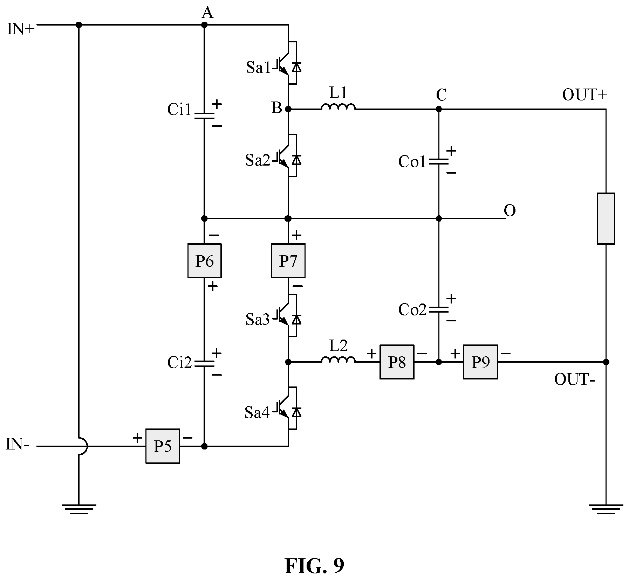

Reference is made to FIG. 9, which is a schematic diagram of a three-level DC/DC circuit according to another embodiment of the present disclosure.

The detection device in the three-level DC/DC circuit according to the embodiments of the present disclosure is further configured to: detect a voltage of the first input capacitor and a voltage of the second input capacitor to determine whether a voltage imbalance occurs, or detect a current of the first inductor and a current of the second inductor to determine whether a voltage imbalance occurs, or detect a current of the output positive electrode and a current of the output negative electrode to determine whether a voltage imbalance occurs.

The overvoltage protection device may be connected to at least one of positions P5 to P9 shown in FIG. 9. In a case that the voltages of the two input capacitors are balanced, the overvoltage protection device is switched on; and in a case that the voltages of the two input capacitors unbalanced, the overvoltage protection device is controlled to be switched off to cut off the overvoltage path.

Specific positions for the overvoltage protection device are described below with reference to the accompanying drawings.

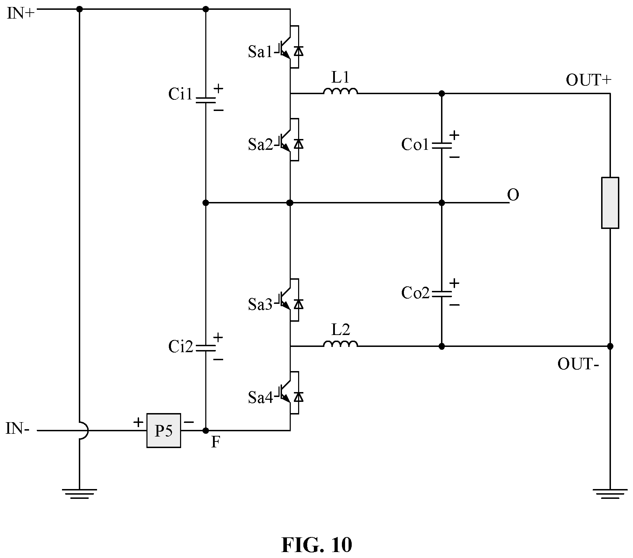

Reference is made to FIG. 10, which is a schematic diagram showing an overvoltage protection device being arranged at a position P5 according to an embodiment of the present disclosure.

In the three-level DC/DC circuit according to the embodiments of the present disclosure, the overvoltage protection device is connected between the input negative electrode IN- and the sixth node F, that is, at the position P5.

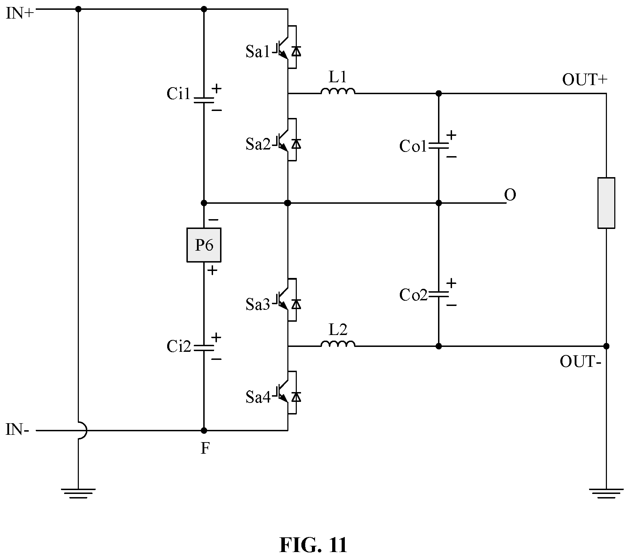

Reference is made to FIG. 11, which is a schematic diagram showing an overvoltage protection device being arranged at a position P6 according to an embodiment of the present disclosure.

In the three-level DC/DC circuit according to the embodiments of the present disclosure, the overvoltage protection device is connected between the sixth node F and the midpoint O, that is, at the position P6. It should be understood that the position P6 is arranged above Ci2 shown in FIG. 11, and the position P6 may be arranged below Ci2.

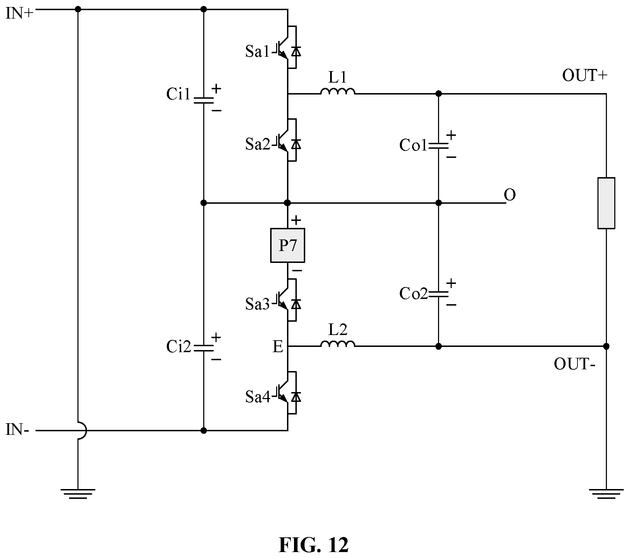

Reference is made to FIG. 12, which is a schematic diagram showing an overvoltage protection device being arranged at a position P7 according to an embodiment of the present disclosure.

In the three-level DC/DC circuit according to the embodiments of the present disclosure, the overvoltage protection device is connected between the midpoint O and the fifth node E, that is, at the position P7. It should be understood that the position P7 is arranged above Sa3 shown in FIG. 12, and the position P7 may be arranged below Sa3.

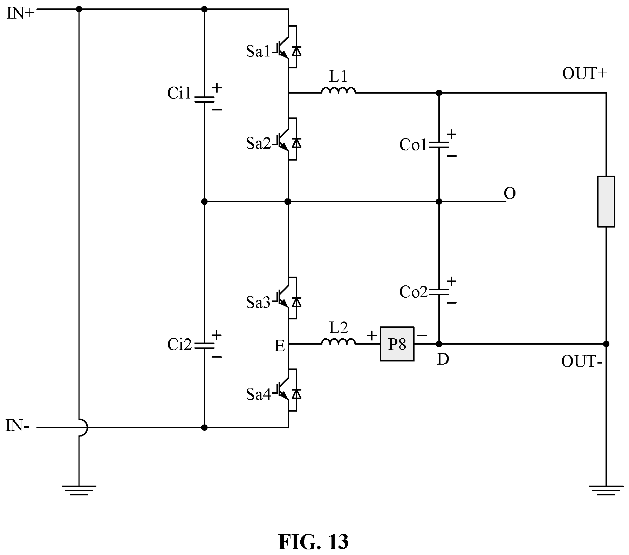

Reference is made to FIG. 13, which is a schematic diagram showing an overvoltage protection device being arranged at a position P8 according to an embodiment of the present disclosure.

In the three-level DC/DC circuit according to the embodiments of the present disclosure, the overvoltage protection device is connected between the fifth node E and the fourth node D, that is, at the position P8. It should be understood that the position P8 is arranged at a right side of L2 shown in FIG. 13, or the position P8 may be arranged at a left side of L2.

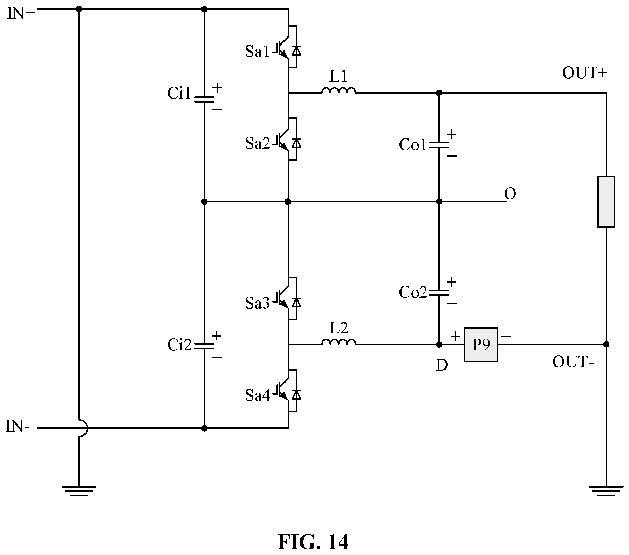

Reference is made to FIG. 14, which is a schematic diagram showing an overvoltage protection device being arranged at a position P9 according to an embodiment of the present disclosure.

In the three-level DC/DC circuit according to the embodiments of the present disclosure, the overvoltage protection device is connected between the fourth node D and the output negative electrode OUT-, that is, at the position P9.

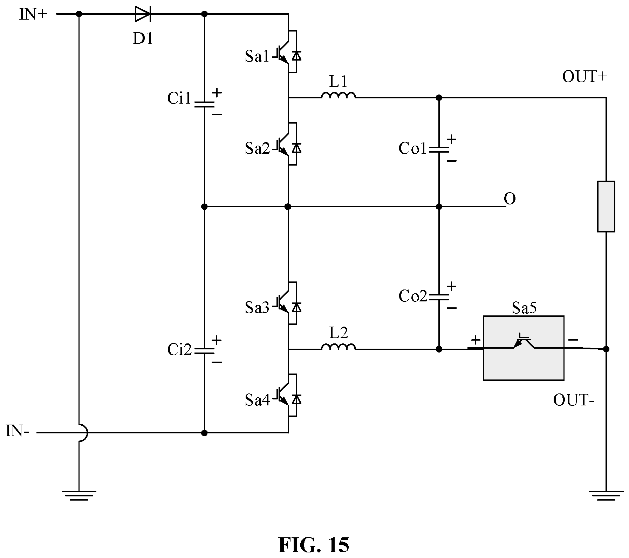

Reference is made to FIG. 15, which is a schematic diagram showing a fully-controlled semiconductor device being arranged at a position P9 according to an embodiment of the present disclosure. As shown in FIG. 15, the overvoltage protection device at the position P9 is a fully-controlled semiconductor device Sa5.

Based on the three-level DC/DC circuit described in the above embodiments, a power supply system is further provided according to an embodiment of the present disclosure, which is described below in detail in conjunction with the accompanying drawings.

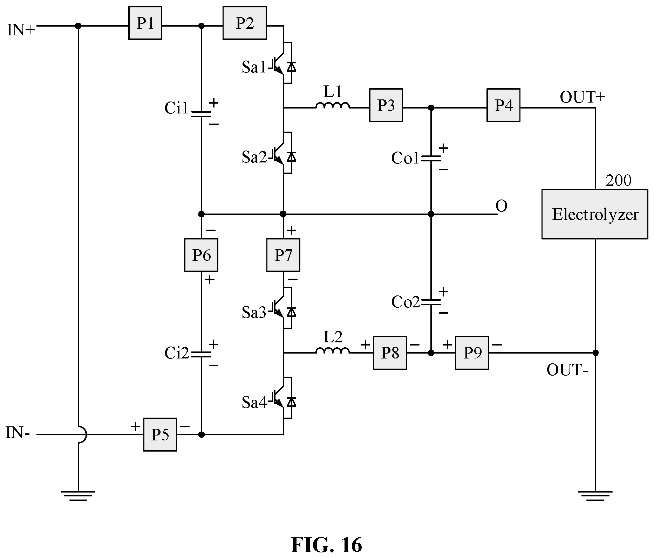

Reference is made to FIG. 16, which is a schematic diagram of a power supply system according to an embodiment of the present disclosure.

A power supply system according to an embodiment of the present disclosure includes the three-level DC/DC circuit described in the above embodiments, and further includes an electrolyzer 200.

The output positive electrode of the three-level DC/DC circuit is connected to a positive electrode of the electrolyzer 200, the output negative electrode of the three-level DC/DC circuit is connected to a negative electrode of the electrolyzer 200, and the negative electrode or a midpoint of the electrolyzer 200 is grounded.

The electrolyzer 200 may be an alkaline electrolyzer. Descriptions are provided by taking the negative electrode of the electrolyzer 200 being grounded as an example. Alternatively, the midpoint of the electrolyzer 200 may be grounded.

Due to the reverse current protection device arranged at least one of positions P1 to P4 in the three-level DC/DC circuit, a current path from the positive electrode of the electrolyzer to the input positive electrode IN+ of the three-level DC/DC circuit is cut off when the input positive electrode IN+ is grounded, thereby protecting the components in the three-level DC/DC circuit.

Referring to FIG. 16, an overvoltage protection device may be arranged at least one of positions P5 to P9 in the three-level DC/DC circuit according to the embodiments of the present disclosure. In a case that a voltage imbalance occurs between the first input capacitor and the second input capacitor, the overvoltage protection device is controlled to be switched off, and the overvoltage path is cut off, thereby protecting the components in the three-level DC/DC circuit.

It should be noted that the embodiments in this specification are described in a progressive manner. Each of the embodiments focuses on its differences from other embodiments, and references may be made among these embodiments with respect to the same or similar parts. The system or apparatus disclosed in the embodiments correspond to the method disclosed in the embodiments, and therefore are described in a relatively simple way. Reference may be made to the descriptions of the method for relevant details.

The disclosed embodiments are described above so that those skilled in the art can implement or use the present disclosure. Various modifications to these embodiments will be apparent to those skilled in the art. The general principles defined herein may be implemented in other embodiments without departing from the spirit or scope of the present application. Therefore, the present disclosure shall not be limited to the embodiments described herein, but have the widest scope that complies with the principle and novelty disclosed in this specification.

## Claims

1. A three-level DC/DC circuit, **characterized in that**:
the three-level DC/DC circuit comprises: a reverse current protection device, a first input capacitor, a second input capacitor, a first switching transistor, a second switching transistor, a third switching transistor, a fourth switching transistor, a first inductor, a second inductor, a first output capacitor, and a second output capacitor, wherein
a first terminal and a second terminal of the first input capacitor are respectively connected to a first node and a midpoint, an input positive electrode of the DC/DC circuit is connected to the first node, and a first terminal and a second terminal of the second input capacitor are respectively connected to the midpoint and a sixth node;
a first terminal and a second terminal of the first switching transistor are respectively connected to the first node and a second node, a first terminal and a second terminal of the second switching transistor are respectively connected to the second node and the midpoint, a first terminal and a second terminal of the third switching transistor are respectively connected to the midpoint and a fifth node, and a first terminal and a second terminal of the fourth switching transistor are respectively connected to the fifth node and the sixth node;
a first terminal and a second terminal of the first inductor are respectively connected to the second node and a third node, a first terminal and a second terminal of the first output capacitor are respectively connected to the third node and the midpoint, a first terminal and a second terminal of the second output capacitor are respectively connected to the midpoint and a fourth node, a first terminal and a second terminal of the second inductor are respectively connected to the fifth node and the fourth node, and an output positive electrode and an output negative electrode of the DC/DC circuit are respectively connected to the third node and the fourth node; and
the reverse current protection device is connected in a current path between the output positive electrode and the input positive electrode, and the reverse current protection device is configured to be switched off when a current flows in a direction from the output positive electrode to the input positive electrode.

2. The three-level DC/DC circuit according to claim 1, wherein
the reverse current protection device comprises at least one of: a diode, a semi-controlled semiconductor device and a fully-controlled semiconductor device; and
the DC/DC circuit further comprises a controller in a case that the reverse current protection device comprises the semi-controlled semiconductor device or the fully-controlled semiconductor device, wherein the controller is electrically connected to the semi-controlled semiconductor device or the fully-controlled semiconductor device, and the controller is configured to control a switching state of the semi-controlled semiconductor device or the fully-controlled semiconductor device.

3. The three-level DC/DC circuit according to claim 2, wherein the DC/DC circuit further comprises an overvoltage protection device, the overvoltage protection device is connected in a current path between the output negative electrode and an input negative electrode of the DC/DC circuit, the overvoltage protection device comprises a fully-controlled semiconductor device, and the overvoltage protection device is configured to be switched on when the current flows in a direction from the output negative electrode to the input negative electrode in a normal operation, and the fully-controlled semiconductor device is configured to be switched off when the input positive electrode is short-circuited to ground.

4. The three-level DC/DC circuit according to claim 2 or 3, wherein the DC/DC circuit further comprises a detection device in the case that the reverse current protection device comprises the semi-controlled semiconductor device or the fully-controlled semiconductor device, wherein
the detection device is configured to detect a voltage between the input positive electrode and the ground, and transmit the voltage between the input positive electrode and the ground to the controller;
the controller is configured to determine whether a ground fault occurs at the input positive electrode, report the ground fault based on the voltage between the input positive electrode and the ground, and control the fully-controlled semiconductor device with bidirectional current flows to be switched off;
in response to the ground fault occurring at the input positive electrode, the semi-controlled semiconductor device with unidirectional current flows or the fully-controlled semiconductor device with unidirectional current flow is automatically switched off; and
the controller is further configured to control the semi-controlled semiconductor device or the fully-controlled semiconductor device to be switched on in a case that no ground fault occurs at the input positive electrode.

5. The three-level DC/DC circuit according to claim 4, wherein the detection device is further configured to: detect a voltage of the first input capacitor and a voltage of the second input capacitor to determine whether a voltage imbalance occurs, or detect a current of the first inductor and a current of the second inductor to determine whether the voltage imbalance occurs, or detect a current of the output positive electrode and a current of the output negative electrode to determine whether the voltage imbalance occurs.

6. The three-level DC/DC circuit according to any one of claims 1 to 5, wherein the reverse current protection device is connected between the input positive electrode and the first node.

7. The three-level DC/DC circuit according to any one of claims 1 to 5, wherein the reverse current protection device is connected between the first node and the second node.

8. The three-level DC/DC circuit according to any one of claims 1 to 5, wherein the reverse current protection device is connected between the second node and the third node.

9. The three-level DC/DC circuit according to any one of claims 1 to 5, wherein the reverse current protection device is connected between the third node and the output positive electrode.

10. The three-level DC/DC circuit according to any one of claims 3 to 5, wherein the overvoltage protection device is connected between the input negative electrode and the sixth node.

11. The three-level DC/DC circuit according to any one of claims 3 to 5, wherein the overvoltage protection device is connected between the sixth node and the midpoint.

12. The three-level DC/DC circuit according to any one of claims 3 to 5, wherein the overvoltage protection device is connected between the midpoint and the fifth node.

13. The three-level DC/DC circuit according to any one of claims 3 to 5, wherein the overvoltage protection device is connected between the fifth node and the fourth node.

14. The three-level DC/DC circuit according to any one of claims 3 to 5, wherein the overvoltage protection device is connected between the fourth node and the output negative electrode.

15. A power supply system, comprising: the three-level DC/DC circuit according to any one of claims 1 to 14, and an electrolyzer, wherein
the output positive electrode of the three-level DC/DC circuit is connected to a positive electrode of the electrolyzer, the output negative electrode of the three-level DC/DC circuit is connected to a negative electrode of the electrolyzer, and the negative electrode of the electrolyzer is grounded or a midpoint of the electrolyzer is grounded.
